(19) Europäisches Patentamt / European Patent Office / Office européen des brevets

(11) **EP 4 700 695 A1**

(12) **EUROPEAN PATENT APPLICATION**
published in accordance with Art. 153(4) EPC

(43) Date of publication:
**25.02.2026  Bulletin 2026/09**

(21) Application number: 24791862.6

(22) Date of filing: **02.04.2024**

(51) International Patent Classification (IPC):
**G06T 3/00** (2024.01)     **G06T 7/00** (2017.01)

(86) International application number:
**PCT/CN2024/085496**

(87) International publication number:
**WO 2024/217277 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **21.04.2023  CN 202310437532**

(71) Applicants:
• **Beijing Zitiao Network Technology Co., Ltd.**
  **Beijing 100190 (CN)**
• **Lemon Inc.**
  **Grand Cayman, KY1-1205 (KY)**

(72) Inventors:
• **ZHOU, Xubin**
  **Beijing 100028 (CN)**
• **ZHANG, Chenliang**
  **Beijing 100028 (CN)**
• **YANG, Yixin**
  **Beijing 100028 (CN)**
• **ZHANG, Yuling**
  **Beijing 100028 (CN)**

(74) Representative: **Isarpatent**
**Patent- und Rechtsanwälte Partg mbB**
**Friedrichstraße 31**
**80801 München (DE)**

(54) **SPECIAL EFFECT IMAGE GENERATION METHOD AND APPARATUS, ELECTRONIC DEVICE, AND STORAGE MEDIUM**

(57)    Embodiments of the present disclosure provide an effect image generation method and apparatus, an electronic device, and a storage medium. The method comprises: acquiring an initial image, the initial image comprising a target region; and fusing the target region of the initial image with an effect image to generate a fused image, wherein the fused image comprises at least one subregion, and image content in the target region and image content of the effect image are simultaneously displayed in the subregion.

S101

Acquiring an initial image which comprises a target region

S102

Fusing the target region of the initial image with an effect image to generate a fusion image, wherein the fusion image comprises at least one sub-region in which image content in the target region and image content of the effect image are simultaneously displayed

Fig. 2

**Description**

**CROSS-REFERENCE TO RELATED APPLICATIONS**

The present application claims the priority to the Chinese patent application No. 202310437532.0 entitled "EFFECT IMAGE GENERATION METHOD AND APPARATUS, ELECTRONIC DEVICE, AND STORAGE MEDIUM" filed on April 21, 2023, the disclosure of which is incorporated by reference herein in its entirety.

**TECHNICAL FIELD**

Embodiments of the present disclosure relate to the field of Internet technology, and in particular to a method and apparatus for generating an effect image and, an electronic device, and a storage medium.

**BACKGROUND**

Adding a background effect into an image is a common image editing function in which, an output image with a virtual background effect is generated by processing and replacing background content outside a target region in an original image, while a portrait part in the original image is retained in the output image.

In the related art, the output image with the background effect that is generated by replacing the background content in the image has a problem of stiff transition and strong sense of fragmentation between the portrait and the background effect, affecting the authenticity and visual effect of the effect.

**SUMMARY**

In a first aspect, an embodiment of the present disclosure provides a method for generating an effect image, comprising:

acquiring an initial image which comprises a target region; and fusing the target region of the initial image with an effect image to generate a fusion image, wherein the fusion image comprises at least one sub-region in which image content in the target region and image content of the effect image are simultaneously displayed.

In a second aspect, an embodiment of the present disclosure provides an apparatus for generating an effect image, comprising:

an acquiring module configured to acquire an initial image which comprises a target region; and

a generating module configured to fuse the target region of the initial image with an effect image to generate a fusion image, wherein the fusion image comprises at least one sub-region in which image content in the target region and image content of the effect image are simultaneously displayed.

In a third aspect, an embodiment of the present disclosure provides an electronic device, comprising:

a processor, and a memory communicatively connected with the processor, wherein
the memory stores computer-executable instructions; and
the processor executes the computer-executable instructions stored by the memory to implement the method for generating an effect image according to the above first aspect and various possible designs of the first aspect.

In a fourth aspect, an embodiment of the present disclosure provides a computer-readable storage medium having stored thereon computer-executable instructions which, when executed by a processor, implement the method for generating an effect image according to the above first aspect and various possible designs of the first aspect.

In a fifth aspect, an embodiment of the present disclosure provides a non-transitory computer program product comprising a computer program which, when executed by a processor, implements the method for generating an effect image according to the above first aspect and various possible designs of the first aspect.

In a sixth aspect, an embodiment of the present disclosure provides a computer program which, when executed by a processor, implements the method for generating an effect image according to the above first aspect and various possible designs of the first aspect.

**BRIEF DESCRIPTION OF THE DRAWINGS**

In order to more clearly illustrate technical solutions in the embodiments of the present disclosure or related art, the drawings required for use in the description of the embodiments or related art will be briefly described below, and it is apparent that the drawings in the following description are some embodiments of the present disclosure, and for one of ordinary skill in the art, other drawings can also be obtained according to the drawings without creative labor.

Fig. 1 is an application scenario diagram of a method for generating an effect image according to an embodiment of the present disclosure;

Fig. 2 is a first schematic flow diagram of a method for generating an effect image according to an embodiment of the present disclosure;

Fig. 3 is a schematic diagram of an initial image according to an embodiment of the present disclosure;

Fig. 4 is a flow diagram of a specific implementation of step S102 in the embodiment shown in Fig. 2;

Fig. 5 is a schematic diagram of generating a fusion image according to an embodiment of the present disclosure;

Fig. 6 is a second schematic flow diagram of a method for generating an effect image according to an embodiment of the present disclosure;

Fig. 7 is a schematic diagram of performing image segmentation on a portrait element according to an embodiment of the present disclosure;

Fig. 8 is a schematic diagram of a process of adding an inverse filter according to an embodiment of the present disclosure;

Fig. 9 is a flow diagram of a specific implementation of step S203 in the embodiment shown in Fig. 6;

Fig. 10 is a flow diagram of a specific implementation of step S205 in the embodiment shown in Fig. 6;

Fig. 11 is a schematic diagram of a second superimposition image according to an embodiment of the present disclosure;

Fig. 12 is a structural block diagram of an effect image generation apparatus according to an embodiment of the present disclosure;

Fig. 13 is a schematic structural diagram of an electronic device according to an embodiment of the present disclosure; and

Fig. 14 is a schematic hardware structural diagram of an electronic device according to an embodiment of the present disclosure.

## DETAILED DESCRIPTION

To make the objectives, technical solutions and advantages of the embodiments of the present disclosure more apparent, the technical solutions in the embodiments of the present disclosure will be described clearly and completely with reference to the drawings in the embodiments of the present disclosure, and it is apparent that the described embodiments are some of the embodiments of the present disclosure, rather than all of them. All other embodiments, which are obtained by one of ordinary skill in the art based on the embodiments in the present disclosure without creative labor, are intended to be within the scope of protection of the present disclosure.

It should be noted that user information (including but not limited to user device information, user personal information, etc.) and data (including but not limited to data for analysis, data for storage, data for presentation, etc.) involved in the present disclosure both are information and data authorized by the user or fully authorized by parties, and the collection, use and processing of the related data need to comply with related laws and regulations and standards in related countries and regions, and corresponding operation entries are provided for the user to select authorization or refusal.

The embodiments of the present disclosure provide a method and apparatus for generating an effect image, an electronic device, and a storage medium, to overcome a problem of stiff transition and strong sense of fragmentation between a portrait and a background effect.

The embodiments of the present disclosure provide a method and apparatus for generating an effect image, an electronic device, and a storage medium, wherein the method comprises: acquiring an initial image which comprises a target region; and fusing the target region of the initial image with an effect image to generate a fusion image, wherein the fusion image comprises at least one sub-region in which image content in the target region and image content of the effect image are simultaneously displayed. By fusing the target region of the initial image with the effect image, the fusion image where the image content in the target region and the image content of the effect image may be displayed in a superimposed manner is obtained, thereby achieving the fusion between the initial image and the effect image, reducing sense of fragmentation between a portrait and a background that are presented in the fusion image, and improving the authenticity and visual expression of the effect.

An application scenario of an embodiment of the present disclosure is explained below:

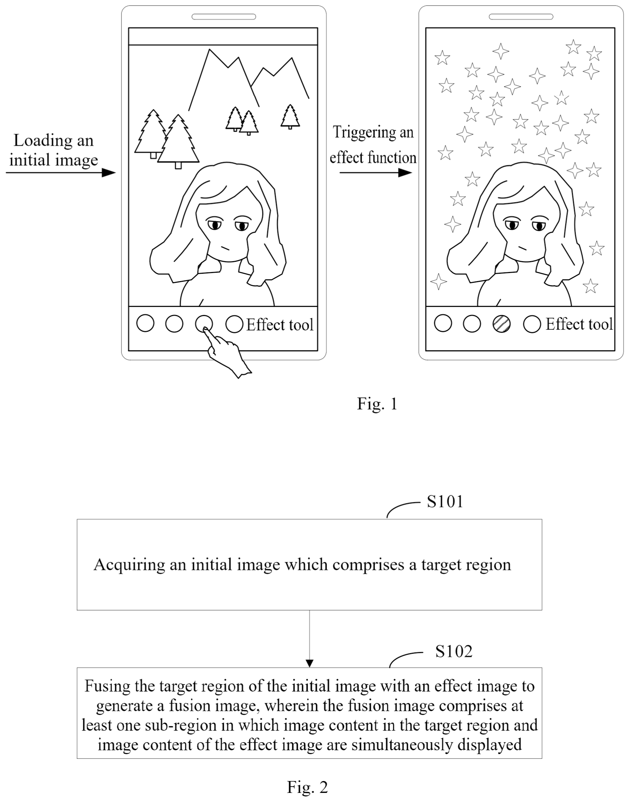

Fig. 1 is an application scenario diagram of a method for generating an effect image according to an embodiment of the present disclosure, where the method for generating an effect image according to the embodiment of the present disclosure may be applied to an application scenario of image effect rendering. More specifically, the method may be applied to an application scenario where a virtual background effect is added for a character image, and as shown in Fig. 1, the method according to the embodiment of the present disclosure may be applied to a terminal device, a server, or another electronic device with a similar function; by taking an example of a terminal device such as a smartphone or a personal computer (shown as a smartphone in the figure), after running an application (APP) with a function of adding an effect for an image, the terminal device loads an initial image, such as a portrait photo shown in the figure, wherein the portrait photo includes a portrait region and a background region; then, by triggering an effect function, for example, clicking an effect tool provided by the APP, image content in the background region is replaced with a preset effect image, for example, a landscape photo, so that the effect of adding a virtual background effect for the character image is achieved.

In the related art, for the above application scenario where the virtual background effect is added for the character image, a common solution is to directly segment a portrait region in the character image (initial image), and then cover a segmentation image characterizing a portrait, which is obtained after the segmentation, onto a preset background image, to generate an output image, thereby achieving background replacement, that is, adding a virtual background feature for the character image. However, in the above solution in the related art, after segmentation is performed along the portrait region of the character image, the obtained segmentation image have obvious differences in color, brightness, image content, and other aspects from the background image, thereby resulting in stiff transition and strong sense of fragmentation between the two images, and affecting the authenticity and visual effect of the virtual background image in the output image. An embodiment of the present disclosure provides a method for generating an effect image to solve the above problems.

Referring to Fig. 2, Fig. 2 is a first schematic flow diagram of a method for generating an effect image according to an embodiment of the present disclosure. The method of this embodiment can be applied to an electronic device, and the method for generating an effect image comprises:

step S101: acquiring an initial image which comprises a target region.

Referring to the application scenario diagram shown in Fig. 1, an execution subject of the method for generating an effect image provided in the embodiment of the present disclosure may be a terminal device, a server, or another electronic device with the similar function; the present embodiment is introduced exemplarily by taking the terminal device as the execution subject, and implementations of other execution subjects are similar and are omitted here.

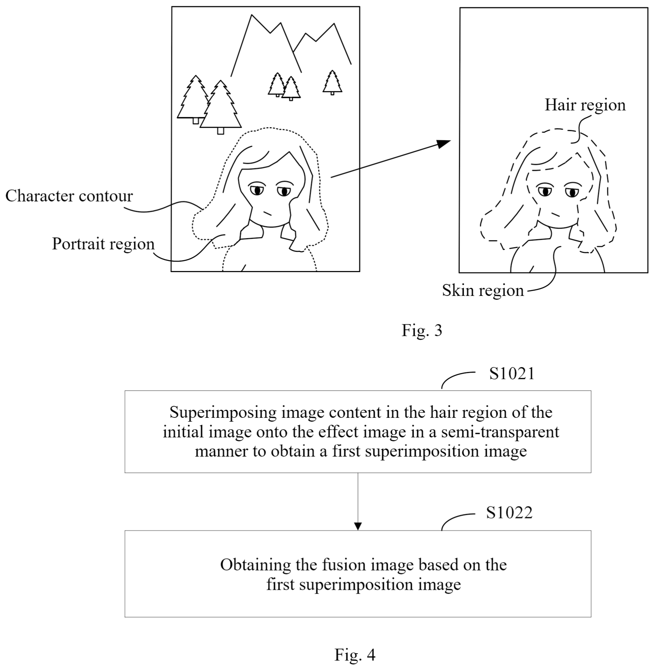

Exemplarily, the terminal device may, by responding to a user operation, load an initial image including a target object, where the target object may be a human body or a part of a human body, such as a head of a human body, and a region where the human body or the part of the human body is located is a target region, that is, a portrait region. Of course, in another possible implementation, the target object may also be another implementation, for example, an animal, an object, and the like, which will not be detailed here. For the case where the target region is a portrait region, the target region is used for characterizing regions where all portrait elements forming the portrait are located, while a region outside the target region in the initial image is a non-target region, which characterizes, exemplarily, a background region of the portrait. Further, a plurality of portrait elements forming the portrait, such as hair, skin, and character dress, may be included in the target region. Each portrait element is located in one sub-region of the target region, for example, a region corresponding to the hair is a hair region; a region corresponding to the skin is a skin region; a region corresponding to the character dress is a dress region. The sub-region may be a continuous image region or a combined region formed by a plurality of discontinuous image regions. Fig. 3 is a schematic diagram of an initial image according to an embodiment of the present disclosure, where as shown in Fig. 3, a target region is a region corresponding to a character contour in the image, and after the target region is further divided, the target region further includes a hair region corresponding to character hair, and a skin region corresponding to a character face and neck. The target region in the initial image and the sub-regions (e.g., the hair region and the skin region) of the target region may be determined by performing image identification on the initial image, with a specific implementation of the prior art, which will not be detailed here.

Step S102: fusing the target region of the initial image with an effect image to generate a fusion image, wherein the fusion image comprises at least one sub-region in which image content in the target region and image content of the effect image are simultaneously displayed.

Exemplarily, the terminal device further reads an effect image, and fuses image content of the effect image, which is taken as a virtual background effect, with the initial image to obtain a fusion image with the virtual background effect. The effect image may be an image selected from a plurality of candidate images based on a selection instruction of a user, or a fixed preset image, and the content of the effect image may be a landscape image such as forests, mountains and rivers, starry sky, or other content, which are not limited here.

Further, when the initial image is fused with the effect image, the image content in the target region of the initial image is fused with the effect image, so that in the fusion image generated after the fusion, the image content in the target region and the image content of the effect image can be simultaneously displayed in at least one sub-region. In a possible implementation, the target region at least includes a hair region, as shown in Fig. 4, a specific implementation of the step S102 comprises:

step S1021: superimposing image content in the hair region of the initial image onto the effect image in a semi-transparent manner to obtain a first superimposition image; and

step S 1022: obtaining the fusion image based on the first superimposition image.

Exemplarily, referring to the schematic diagram of the target region shown in Fig. 3, the hair region is a region where the hair element is displayed, and when the target region of the initial image is fused with the effect image, the image content of the hair region, that is, the hair element, is superimposed onto the effect image in a semi-transparent manner, to obtain a first superimposition image, wherein the semi-transparent manner stated herein refers to simultaneously displaying, in the first superimposition image generated when the hair element is superimposed onto the effect image, an image feature of the hair element and an image feature of the effect image of a corresponding region, so that the hair element exhibits a visual effect of "transparentization". The superimposing image content in the hair region of the initial image onto the effect image in a semi-transparent manner may have a specific implementation of performing brightness weighting on a pixel in the hair region of the initial image and a pixel in the effect image, for example, decreasing brightness of the pixel in the hair region and increasing brightness of the pixel in the effect image, and then performing pixel fusion on the pixel in the hair region and a pixel in a corresponding position in the effect image, wherein the degree of transparentization, i.e., transparency, of the hair element, is determined based on a specific weighting manner of performing brightness weighting on the pixels in the hair region and the pixels in the effect image and weighting values, a specific implementation process of which will be introduced in the subsequent embodiments.

Then, exemplarily, after the first superimposition image is obtained, the first superimposition image may be subjected to other post-processing, for example, correspondingly superimposing image content in another image region than the hair region onto a corresponding position in the first superimposition image, to obtain the fusion image. In a possible implementation, a specific implementation of the step S1022 comprises:

step S1022A: superimposing image content in the skin region onto the first superimposition image in a non-transparent to obtain a second superimposition image; and
step S1022B: obtaining the fusion image based on the second superimposition image.

Exemplarily, after the first superimposition image is obtained, further, image content in the skin region in the initial image is superimposed onto the first superimposition image in a non-transparent manner, to obtain a second superimposition image, and at this time, in the second superimposition image, in the sub-region corresponding to the hair region, the image content (character hair) in the hair region and the image content of the effect image are simultaneously displayed, realizing the fusion presentation of the background effect of the character hair; and in the sub-region corresponding to the skin region, the image content (character skin) of the initial image masks the image content of the effect image, that is, only the image content of the initial image is displayed, thereby realizing the presentation of the character skin. In another possible implementation, the image content in the skin region in the initial image may be superimposed onto the first superimposition image in a semi-transparent manner. Specifically, for example, the skin region may be further divided into a face skin region and a neck skin region, exemplarily, image content of the face skin region is superimposed onto the first superimposition image in a non-transparent manner; and image content of the neck skin region is superimposed onto the first superimposition image in a semi-transparent manner, thereby realizing more exquisite portrait edge transition in the second superimposition image, and improving the fusion effect of the background effect (the image content of the effect image) and the character (the image content of the target region). Then, exemplarily, further post-processing may be performed based on the second superimposition image to obtain the fusion image; or, the second superimposition image is directly used as the fusion image, which will not be detailed here.

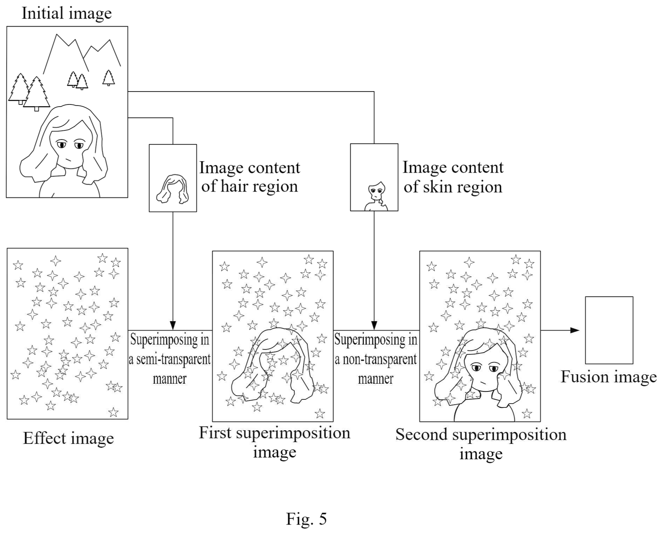

Fig. 5 is a schematic diagram of generating a fusion image according to an embodiment of the present disclosure, wherein as shown in Fig. 5, exemplarily, an initial image is an image including a portrait, an effect image is an image of which image content is "starry sky", and an image size of the initial image is equal to that of the effect image; the initial image includes a target region, which includes a hair region and a skin region, firstly, image content of the hair region is superimposed onto the effect image in a semi-transparent manner to generate a first superimposition image where a texture of hair strands in the portrait is fused with an effect image of a corresponding region, that is, the texture of hair strands and the "starry sky" are simultaneously displayed in a sub-region corresponding to the hair region. Then, based on the first superimposition image, image content of the skin region in the initial image is further superimposed onto the effect image in a non-transparent manner, to generate a second superimposition image, and then the second superimposition image is further processed to obtain the fusion image, or the second superimposition image is directly used as the fusion image. Skin of a character in the fusion image obtained based on the second superimposition image can be clearly displayed, thereby highlighting the face contour of the character, and restoring face expression of the character, while the hair of the character is integrated with the background effect, achieving smooth transition between the portrait and the background effect and optimization of the display effect, and improving the visual display effect.

Further, optionally, after the fusion image is generated, the image content of the fusion image may be further adjusted, so that the image content of the fusion image is more matched with the portrait improving the display effect, for example, after the step S102, optionally, the method further comprises:

step S1031: acquiring texture information corresponding to the hair region, which characterizes texture directions of hair strands in the hair region; and

step S1032: moving target elements in the fusion image based on the texture information so that the target elements are arranged or moved in the texture directions of the hair strands.

Exemplarily, by identifying an initial image, texture information characterizing texture directions of hair strands in the hair region can be obtained, wherein exemplarily, the texture information includes coordinate sets corresponding to a plurality of reference hair strands, and each coordinate set includes a plurality of coordinates characterizing nodes of a hair strand; a texture path of the corresponding reference hair strand is characterized by the coordinate set. Specifically, for example, by identifying an initial image, texture information hair_Info=(L1, L2, L3...,Ln) corresponding to the hair region is obtained, where L1, L2, L3, ... , and Ln are hair strand paths of n reference hair strands, respectively; by taking L1 as an example, L1=[p1_1, p1_2, p1_3, p1_4], where p1_1, p1_2, p1_3, and p1_4 respectively represent 4 hair strand nodes on a reference hair strand #1, by which the hair strand path L1 corresponding to the reference hair strand #1 is identified, and the other hair strand paths are similarly represented, which will not be detailed. A set of the hair strand paths of the reference hair strands is the texture information, and identifying a hair strand in the image and generating a corresponding hair strand path has a specific implementation of the prior art, which will not be detailed here.

Further, after the texture information is obtained, positions of target elements in the fusion image are adjusted based on the texture information, specifically, for example, an effect image for generating the fusion image is a "starry sky" image, and thus, target elements in the fusion image are "stars in the starry sky"; after the target elements in the fusion image are identified, positions of the target elements are adjusted based on the texture information, so that the positions of the target elements are matched with the texture directions of the hair strands, and thus the effect such as the "stars in the starry sky" being arranged along the texture of hair strands or flowing in the texture directions of the hair strands is achieved. By the solution of the steps of this embodiment, the fusion and integration between the virtual background effect (the image content of the effect image) and the portrait (the image content in the target region) in the fusion image can be further improved, and the authenticity and visual expression of the virtual background effect are improved.

Further, optionally, after the fusion image is generated, a dynamic effect may be further added for the static fusion image, thereby generating a dynamic effect image. An effect type of the dynamic effect is determined by the image content of the effect image, for example, if content of an effect image is "starry sky", an effect of "stars twinkle" is correspondingly selected as it corresponding target dynamic effect, so that the target dynamic effect is matched with a content theme of the generated fusion image, improving the effect visual expression of the generated dynamic effect image. Mapping relation between the dynamic effect and the image content of the effect image may be preset, which may be mapping to the target dynamic effect based on an identification of the effect image, or after the image content of the effect image is detected, mapping into the target dynamic effect based on the type identification of the image content, which may be specifically set as needed, and will not be detailed here.

Then, after the fusion image is generated, when a terminal device is used as an execution subject of the method provided by this embodiment, the fusion image may be directly displayed on the terminal device side, for example, in image editing software running in the terminal device, for effect presentation of the effect image; and when a server or other electronic device is used as an execution subject of the method provided by this embodiment, the fusion image may be sent to a terminal device side for presentation or storage, to complete production and presentation of the effect image, of which the specific process will not be detailed.

In this embodiment, an initial image which comprises a target region is acquired; and the target region of the initial image is fused with an effect image to generate a fusion image, wherein the fusion image comprises at least one sub-region in which image content in the target region and image content of the effect image are simultaneously displayed. By fusing the target region of the initial image with the effect image, the fusion image where the image content in the target region and the image content of the effect image may be displayed in a superimposed manner is obtained, thereby achieving the fusion between the initial image and the effect image, reducing sense of fragmentation between a portrait and a background that are presented in the fusion image, and improving the authenticity and visual expression of the effect.

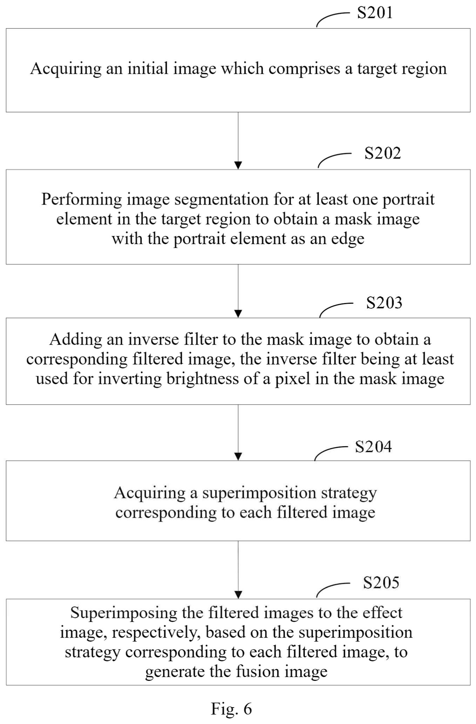

Referring to Fig. 6, Fig. 6 is a second schematic flow diagram of a method for generating an effect image according to an embodiment of the present disclosure. In this embodiment, on the basis of the embodiment shown in Fig. 2, the step S102 is refined to further describe the implementation process of fusing the target region of the initial image with the effect image, and the method for generating an effect image comprises:

step S201: acquiring an initial image which comprises a target region; and

step S202: performing image segmentation for at least one portrait element in the target region to obtain a mask image with the portrait element as an edge.

Exemplarily, in acquiring an initial image, based on a portrait element in the initial image, image segmentation may be performed, and the obtained segmentation result is a mask image, wherein, a mask is information for marking a valid region in an image, generally formed by 0 and 1, where a region where a pixel corresponding to 0 is located is an invalid region, and a region where a pixel corresponding to 1 is located is a valid region. A process of "masking", by the mask, a to-be-processed image to implement image segmentation, is mask calculation, and in this embodiment, after the target region (or the initial image entirety) of the initial image is identified, mask calculation is performed on the portrait element therein, thereby achieving pixel-level segmentation on the above portrait element, and then the obtained segmentation result is a mask image with the portrait element as an edge. An image size of the mask image may be the same as that of the initial image, so that in the valid region corresponding to the portrait element in the mask image, a pixel value of each pixel is the same as a pixel value of a pixel corresponding to the portrait element in the initial image; and in the invalid region not corresponding to the portrait element in the mask image, a pixel value of each pixel is 0 or null.

In a possible implementation, the portrait element comprises a hair element, and a specific implementation of the step S202 comprises: performing image segmentation for the hair element to obtain a corresponding first mask image.

Exemplarily, in this embodiment, first, a hair element in the target region is identified, and then, image segmentation is performed by using the hair element as a target, so that a first mask image with the hair element as an edge can be obtained, wherein the first mask image is a segmentation image characterizing the hair element, i.e., a hair strand texture of a character in the initial image.

Optionally, after obtaining the first mask image, the method further comprises: performing a sharpening process on the first mask image to obtain a sharpened image. Due to close colors between hair strands in the first mask image characterizing the hair strands, directly performing subsequent processing steps (adding a filter or fusing with an effect image) on the first mask image may result in the hair strands being undistinguishable and visually integrated, affecting the visual hair strand texture. In the step of this embodiment, image sharpening is performed on the first mask image, improving the contrast between the pixels, thereby highlighting a hair strand contour, making an edge between the hair strands clearer, and improving the visual hair strand texture.

It can be understood that the step of this embodiment is an optional step, and therefore, in the subsequent steps, subsequent processing may be continued by using the sharpened image obtained by the step of this embodiment, or by directly using the first mask image, which may be set as needed.

Optionally, the portrait element further comprises a skin element, and a specific implementation of the step S202 further comprises:

step S2022: performing image segmentation for the skin element to obtain a corresponding second mask image.

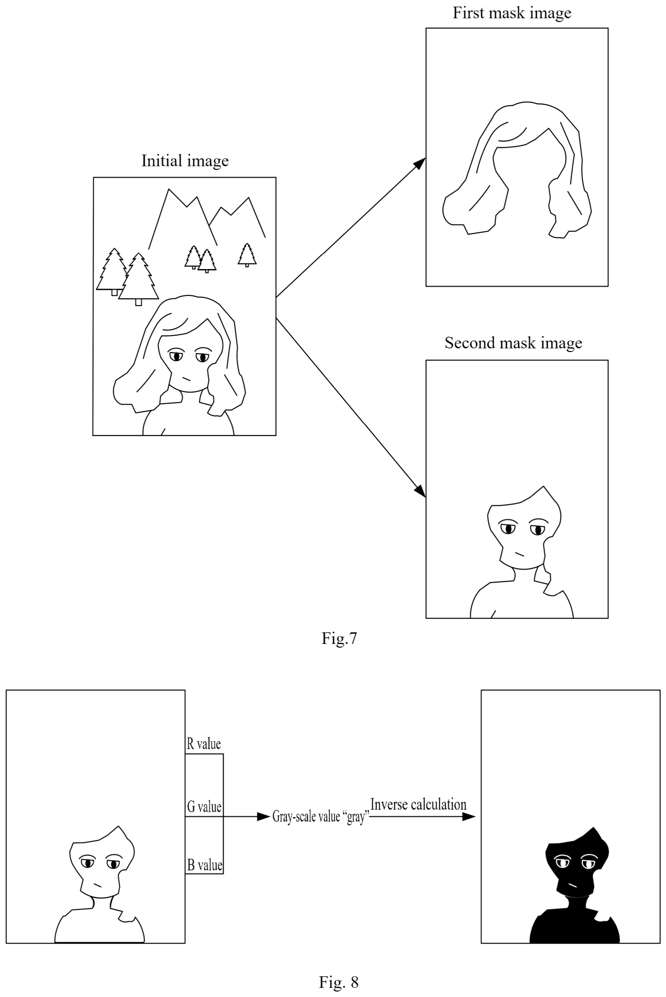

Exemplarily, further, on the basis of image segmentation on the hair element, segmentation on the skin element (portrait element) in the initial image may be continued to obtain a second mask image characterizing the skin element, wherein the second mask image, similar to the first mask image, is obtained in a manner of, first, after a target region (or an initial image entirety) is identified, determining an image region where the skin element is located, and then performing image segmentation by using the skin element as a target, and obtaining a second mask image with the skin element as an edge by using mask calculation, exemplarily, a position where the hair element is located in the first mask image and a position where the skin element is located in the second mask image are consistent with positions where the hair element and the skin element are located in the initial image. Fig. 7 is a schematic diagram of performing image segmentation for a portrait element according to an embodiment of the present disclosure, wherein as shown in Fig. 7, after mask calculation is performed for a hair element and a skin element in an initial image, respectively, pixels corresponding to the hair element are segmented to obtain a first mask image; and pixels corresponding to the skin element are segmented to obtain a second mask image.

Certainly, in another possible implementation, it is also possible to individually perform image segmentation on the hair element to obtain a mask image for subsequent steps; or, individually perform image segmentation on the skin element to obtain a mask image for subsequent steps. That is, the step S2021 and the step S2022 can be performed individually to perform the step S202, which will not be detailed here.

Optionally, the method further comprises:

step S203: adding an inverse filter to the mask image to obtain a corresponding filtered image, the inverse filter being at least used for inverting brightness of a pixel in the mask image.

Exemplarily, after the step S202, an inverse filter may be further added to the mask image obtained in the step S202 to obtain a corresponding filtered image. Adding the inverse filter at least includes performing inverse calculation on the image to invert brightness of a pixel in the mask image. Specifically, for example, an initial image is an RGB image, each pixel in a mask image that is obtained by performing image segmentation on the initial image has three pixel values (RGB values for short) respectively corresponding to a red channel (R value), a green channel (G value), and a blue channel (B value); in one implementation, a gray-scale value corresponding to the pixel is obtained by performing gray-scale conversion on the RGB values, the gray-scale value characterizing brightness of the pixel, and in another implementation, weighted average is performed on the RGB values, and based on different weights of the R channel, the G channel, and the B channel, a corresponding brightness value characterizing brightness is obtained, wherein the specific weights of the channels may be set as needed, and will not be detailed here. Then, by taking an example of the case where the gray-scale value characterizes the brightness, the gray-scale value is inverted, for example, the gray-scale value is: "gray", it is inverted by calculating: 255-gray. A result obtained by performing the above brightness (gray-scale value) inverse calculation on each pixel in the mask image is an inverse calculation result. Then, the inverse calculation result may be directly used as a filtered image, or another filter may be further added to the inverse calculation result to obtain a filtered image. Fig. 8 is a schematic diagram of a process of adding an inverse filter according to an embodiment of the present disclosure, wherein as shown in Fig. 8, first, a gray-scale value "gray" characterizing brightness is obtained based on an R value, G value, and B value of each pixel in a mask image; and then, inverse calculation is performed on the gray-scale value "gray" to obtain a filtered image. Optionally, in the above process, it is possible to further add a filter to the mask image before the gray-scale calculation (shown as a left position in Fig. 8), or add a filter to the obtained inverse image after the gray-scale calculation and inverse (shown as a right position in Fig. 8), thereby further setting the filtered image. The adding a filter to the image has a specific implementation of the prior art, which will not be detailed here.

Further, in the above step, when the mask image includes a plurality of mask images, for example, the first mask image and the second mask image, the mask images may be respectively processed by using the same or different inverse filters, thereby obtaining filtered images corresponding to the mask images, for example, a first filtered image corresponding to the first mask image and a second filtered image corresponding to the second mask image, of which a specific process will not be detailed.

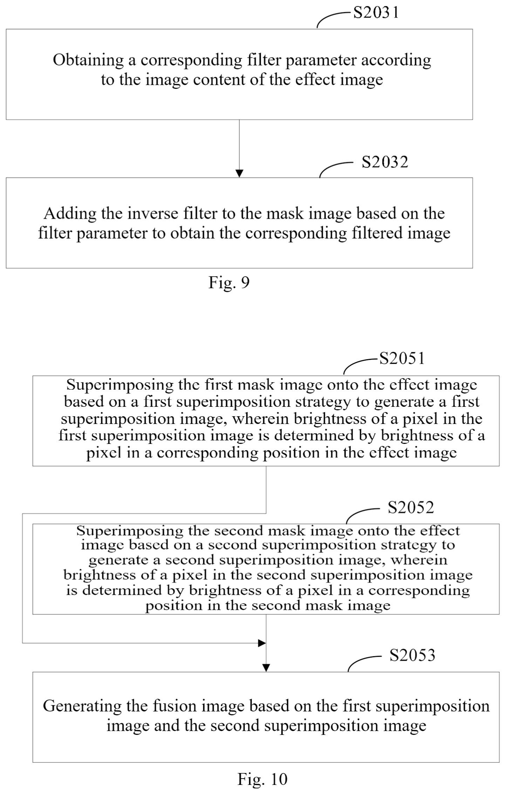

Exemplarily, as shown in Fig. 9, a specific implementation of the step S203 comprises:

step S2031: obtaining a corresponding filter parameter according to the image content of the effect image; and

step S2032: adding the inverse filter to the mask image based on the filter parameter to obtain the corresponding filtered image.

Exemplarily, in the process of adding an inverse filter to the mask image, in order to further improve the consistency between the obtained filtered image and the effect image, a filter parameter may be adjusted based on the image content of the effect image, so that a tone and brightness of the obtained filtered image are consistent with those of the effect image. For example, content of an effect image is "starry sky", and the effect image uses black night sky as a background, so the overall brightness is dark, and according to the feature of the above image content of the effect image, when inverse calculation is performed on the mask image, an brightness offset "offset" is added on the basis of normal inverse calculation, then the inverse calculation is performed by: 255-gray+offset; that is, on the basis of inverting the gray-scale value "gray", an offset is added, when the offset "offset" is less than zero, the brightness of the filtered image can be further decreased; and when the offset "offset" is greater than zero, the brightness of the filtered image can be further increased, so that the obtained filtered image is matched with the effect image, reducing sense of fragmentation between the filtered image and the effect image, and improving the visual effect of the finally generated fusion image.

The above offset "offset", which is a possible implementation of the filter parameter, may be determined based on average pixel brightness of the effect image, and it can be understood that the filter parameter may also include another possible implementation of, for example, determining a weight coefficient based on the average pixel brightness of the effect image, and further adjusting the result (255-gray) of the inverse calculation of the mask image by the weight coefficient; and the filter parameter may also be an adjustment parameter of the filter added for the inverse image or the mask image, which may be set as needed, and will not be detailed one by one here.

It should be noted that, in this embodiment, when the content of the effect image is a starry sky image, by adding an inverse filter to the mask image, brightness of the mask image is inverted, which can highlight the portrait face contour of the character image in the background of the starry sky image, and in combination with a subsequent second superimposition strategy for the skin region, make the face presented in a non-transparent state and another skin region presented in a certain transparent state, so that character face element are highlighted, and the visual expression of the image is improved.

Step S204: acquiring a superimposition strategy corresponding to each filtered image.

Step S205: superimposing the filtered images to the effect image, respectively, based on the superimposition strategy corresponding to each filtered image, to generate the fusion image.

Exemplarily, after the above step of this embodiment, a first filtered image corresponding to the first mask image and a second filtered image corresponding to the second mask image are obtained, respectively, and then, based on different superimposition strategies, the first filtered image and the second filtered image are processed, respectively, so that the first filtered image and the second filtered image are presented in different visual effects; specifically, the first filtered image generated based on the first mask image (mask image containing the hair element) corresponds to a first superimposition strategy; the second filtered image generated based on the second mask image (mask image containing the skin element) corresponds to a second superimposition strategy, wherein specifically, the first superimposition strategy is used for superimposing the image content in the hair region onto the effect image in a semi-transparent manner, to obtain a first superimposition image, and the second superimposition strategy is used for superimposing the image content in the skin region onto the first superimposition image in a non-transparent or semi-transparent manner, to obtain a second superimposition image. In a possible implementation manner, after the first superimposition image corresponding to the hair element is obtained by the first superimposition strategy and the second superimposition image corresponding to the skin element is obtained by the second superimposition strategy, respectively, the first superimposition image and the second superimposition image are spliced, so that the fusion image is obtained.

Exemplarily, as shown in Fig. 10, a specific implementation of the step S205 comprises:

step S2051: superimposing the first mask image onto the effect image based on a first superimposition strategy to generate a first superimposition image, wherein brightness of a pixel in the first superimposition image is determined by brightness of a pixel in a corresponding position in the effect image;
step S2052: superimposing the second mask image onto the effect image based on a second superimposition strategy to generate a second superimposition image, wherein brightness of a pixel in the second superimposition image is determined by brightness of a pixel in a corresponding position in the second mask image; and
step S2053: generating the fusion image based on the first superimposition image and the second superimposition image.

Specific implementations of the first superimposition strategy and the second superimposition strategy are respectively described in detail below. Exemplarily, the first superimposition strategy is a superimposition mix mode in which the effect image is a base image (also called a base color), the first filtered image is a mix image (also called a mix color), and a mix result generated by superimposing the first filtered image onto the effect image is the first superimposition image (also called a fusion result). In the process of superimposing the first filtered image onto the effect image, a pixel in the first filtered image and a pixel in a corresponding position in the effect image are subjected to pixel fusion, for example: calculating a weighted average between the pixel values. However, brightness of the pixel in the fusion result is determined by a brightness value of a pixel at a corresponding position in the base image, and a brightness value of the pixel is obtained by performing weighted average on RGB values of the pixel, wherein specific calculation of the brightness value can be specifically set based on the needs. Specifically, the first superimposition strategy may be represented by equation (1):

$$\text{Mix\_1} = \begin{cases} P1 \times P2/128 & , P1 \leq 128 \\ 255 - (255 - P1) \times (255 - P2)/128 & , P1 > 128 \end{cases} \quad (1)$$

where Mix_1 is the fusion result based on the first superimposition strategy, that is, the pixel value of the pixel in the first superimposition image, P1 is the brightness value (for example, represented by the gray-scale value) of the pixel in the effect image; P2 is the brightness value (for example, represented by the gray-scale value) of the pixel in the first filtered image. In the step of this embodiment, the first filtered image corresponding to the hair element is fused by the first superimposition strategy, so that the high-brightness image element in the effect image (i.e., the background part of the fusion image), such as stars and lights in the sky, can be fully presented, achieving the visual effect of display it "through" the hair strand texture in the first filtered image; and the low-brightness image element in the effect image and the hair strand texture in the first filtered image are uniformly mixed, and the contour shape of the hair strand texture is reserved, so that the technical effect of superimposing the image content in the hair region onto the effect image in the semi-transparent manner is achieved, enabling the image content in the target region and the image content of the effect image to be simultaneously displayed in the fusion image.

Exemplarily, the second superimposition strategy is a normal mix mode based on a brightness weight, and based on this normal mix mode, in the process of superimposing the second filtered image onto the effect image, a pixel in the second filtered image and a pixel in a corresponding position in the effect image are subjected to weighted pixel fusion based on brightness of the pixel in the second filtered image.

Exemplarily, a specific implementation of the step S2052 comprises:

step S2052A: acquiring a gray-scale value of each pixel in the second mask image; and
step S2052B: fusing the pixel in the second mask image and a pixel in corresponding positions in the effect image by using the gray-scale value as a weight to generate the second superimposition image.

Exemplarily, weighted average calculation is performed on pixel values (RGB values) of each pixel in the second filtered image to obtain a gray-scale value characterizing brightness corresponding to the pixel, and then, by using the gray-scale value of the pixel in the second filtered image as a weight, the pixel in the second filtered image and a pixel in the corresponding position in the effect image are fused to generate a second superimposition image, specifically, the second superimposition strategy can be represented by equation (2):

$$\text{Mix\_2} = \text{mix}(P\_3, P\_1, \text{gray}) \quad (2)$$

where Mix_2 is the fusion result based on the second superimposition strategy, i.e., the pixel value of the pixel in the second superimposition image; mix() is a function for calculating pixel fusion, and P_1 is the pixel value of the pixel in the effect image; and P_3 is the pixel value of the pixel in the second filtered image. "gray" is the gray-scale value of the pixel in the second filtered image. Exemplarily, gray=(P3_R+P3_G+P3_B)/3, that is, the gray-scale value of the pixel in the second filtered image is an average of the R channel value, the G channel value, and the B channel value of the pixel. Then, fusion is performed on P_3, P_1 based on the gray-level value, wherein the less the "gray"(brightness), the more significant the image content (skin element) in the second superimposition image after the fusion, i.e. the lower the transparency, and vice versa, the greater the "gray", the less significant the image content (skin element) in the second superimposition image after the fusion, i.e. the higher the transparency, specifically, for example, mix(P_3, P_1, gray) is implemented by, for example, mix(P_3, P_1, gray)= P_3+P_1 × gray.

Then, based on a position relation between the hair element and the skin element in the initial image, deduplication and splicing are performed on the first superimposition image and the second superimposition image to obtain the fusion image.

In the step of this embodiment, by the above second superimposition strategy, the second filtered image corresponding to the skin element is fused, so that the effect image (i.e., the background part of the fusion image) can be masked based on the brightness of the skin element, and because the second filtered image is the result of adding the inverse filter to the second mask image characterizing the skin element, the brightness is exactly opposite to that of the second mask image, wherein in the specific visual effect, for the face skin for which the skin element is located in the face region, due to its higher brightness, the brightness is lower in the corresponding second filtered image, and therefore in the fusion image generated after mixing, the face skin has low transparency, and the effect image in the background part is almost completely masked, so that the technical effects of highlighting the character face contour and restoring the character face expression are achieved; and for the neck skin for which the skin element is located in the neck region, due to its lower brightness, the brightness is high in the corresponding second filtered image, and therefore in the fusion image generated after mixing, the neck skin still has a certain transparency, that is, it is in a semi-transparent state, so that the background content (i.e., the image content of the effect image) can be partially penetrate it, thereby achieving the visualized fusion of the neck skin element and the effect image, and further improving the effect of the fusion between the character and the background in the fusion image.

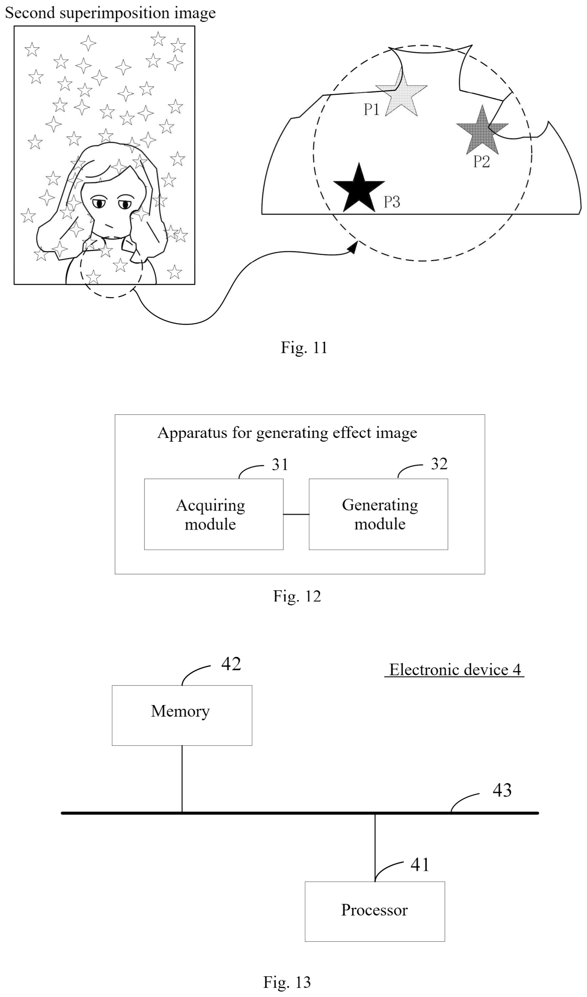

Further, since the gray-scale values of the pixels in the second filtered image continuously change, in the second superimposition image and the final fusion image obtained based on the method of this embodiment, for the skin element (including the face skin and neck skin, etc.)corresponding to the second filtered image, its corresponding transparency also continuously changes; Fig. 11 is a schematic diagram of a second superimposition image according to an embodiment of the present disclosure, as shown in Fig. 11, an effect image includes target elements P1, P2, and P3 (shown as P1, P2, and P3 in the figure), and after a second filtered image and the effect image (or a first superimposition image) are fused, based on gray-scale values (brightness) among pixels in the second filtered image, transparency of the target elements P1, P2, and P3 in the second superimposition image continuously changes in a skin region corresponding to a character skin, for example, the transparency of the target element P1 is 80%, the transparency of the target element P2 is 50%, and the transparency of the target element P3 is 0%, so that the effect of more natural fusion between the character and the background is achieved, an obvious segmentation boundary is avoided, and the visual effect of the generated fusion image is improved.

Of course, it can be understood that the first filtered image and the second filtered image in the above embodiment are obtained on the basis of the first mask image and the second mask image. Therefore, in another implementation, the above step may be directly performed on the first mask image and the second mask image to obtain the fusion image. That is, the step of adding the inverse filter is omitted, with the similar specific implementation, which will not be detailed here.

Fig. 12 is a block diagram of an apparatus for generating an effect image according to an embodiment of the present disclosure, which corresponds to the method for generating an effect image according to the above embodiment. For ease of illustration, only parts related to the embodiment of the present disclosure are shown. Referring to Fig. 12, the apparatus 3 for generating an effect image comprises:

an acquiring module 31 configured to acquire an initial image which comprises a target region; and
a generating module 32 configured to fuse the target region of the initial image with an effect image to generate a fusion image, wherein the fusion image comprises at least one sub-region in which image content in the target region and image content of the effect image are simultaneously displayed.

In an embodiment of the present disclosure, the target region at least comprises a hair region, and the generating module 32 is specifically configured to: superimpose image content in the hair region onto the effect image in a semi-transparent manner to obtain a first superimposition image; and obtain the fusion image based on the first superimposition image.

In an embodiment of the present disclosure, the target region at least further comprises a skin region, and the generating module 32 is, when obtaining the fusion image based on the first superimposition image, specifically configured to: superimpose image content in the skin region onto the first superimposition image in a non-transparent or semi-transparent manner to obtain a second superimposition image; and obtain the fusion image based on the second superimposition image.

In an embodiment of the present disclosure, the generating module 32 is further configured to: acquire texture information corresponding to the hair region, which characterizes texture directions of hair strands in the hair region; and move target elements in the fusion image based on the texture information so that the target elements are arranged or moved in the texture directions of the hair strands.

In an embodiment of the present disclosure, after the acquiring an initial image, the generating module 32 is further configured to: perform image segmentation for at least one portrait element in the target region to obtain at least two mask images with the portrait element as an edge; and the generating module 32 is, when fusing the target region of the initial image with an effect image to generate a fusion image, specifically configured to: superimpose the mask image onto the effect image based on a superimposition strategy corresponding to the mask image to generate the fusion image.

In an embodiment of the present disclosure, the portrait element comprises a hair element; the generating module 32 is, when performing image segmentation for at least one portrait element in the target region to obtain the mask image with the portrait element as an edge, specifically configured to: perform image segmentation for the hair element to obtain a corresponding first mask image; and the generating module 32 is, when superimposing the mask image onto the effect image based on a superimposition strategy corresponding to the mask image to generate the fusion image, specifically configured to: superimpose the first mask image onto the effect image based on a first superimposition strategy to generate a first superimposition image, wherein brightness of a pixel in the first superimposition image is determined by brightness of a pixel in a corresponding position in the effect image; and generate the fusion image based on the first superimposition image.

In an embodiment of the present disclosure, after the performing image segmentation for the hair element to obtain a corresponding first mask image, the generating module 32 is further configured to: perform a sharpening process on the first mask image to obtain a sharpened image; and the generating module 32 is, when superimposing the first mask image onto the effect image based on a first superimposition strategy to generate a first superimposition image, specifically configured to: superimposing the sharpened image onto the effect image based on the first superimposition strategy to generate the first superimposition image.

In an embodiment of the present disclosure, the portrait element comprises a skin element; the generating module 32 is, when performing image segmentation for at least one portrait element in the target region to obtain the mask image with the portrait element as an edge, specifically configured to: perform image segmentation for the skin element to obtain a corresponding second mask image; and the generating module 32 is, when superimposing the mask image onto the effect image based on a superimposition strategy corresponding to the mask image to generate the fusion image, specifically configured to: superimpose the second mask image onto the effect image based on a second superimposition strategy to generate a second superimposition image, wherein brightness of a pixel in the second superimposition image is determined by brightness of a pixel in a corresponding position in the second mask image; and generate the fusion image based on the second superimposition image.

In an embodiment of the present disclosure, the generating module 32 is, when superimposing the second mask image onto the effect image based on a second superimposition strategy to generate a second superimposition image, specifically configured to: acquire a gray-scale value of each pixel in the second mask image; and fuse the pixel in the second mask image and a pixel in corresponding positions in the effect image by using the gray-scale value as a weight to generate the second superimposition image.

In an embodiment of the present disclosure, the generating module 32 is further configured to: add an inverse filter to the mask image to obtain a corresponding filtered image, the inverse filter being at least used for inverting brightness of a pixel in the mask image; and the generating module 32 is, when superimposing the mask image onto the effect image to generate the fusion image, specifically configured to: superimpose at least one filtered image onto the effect image to generate the fusion image.

In an embodiment of the present disclosure, the generating module 32 is, when adding an inverse filter to the mask image to obtain a corresponding filtered image, specifically configured to: obtain a corresponding filter parameter according to the image content of the effect image; and add the inverse filter to the mask image based on the filter parameter to obtain the corresponding filtered image.

In an embodiment of the present disclosure, after the fusing the target region of the initial image with an effect image to generate a fusion image, the generating module 32 is further configured to: add a dynamic effect for a second target region in the fusion image to obtain a dynamic effect image, wherein an effect type of the dynamic effect is determined by the image content of the effect image.

The acquiring module 31 is connected with the generating module 32. The apparatus 3 for generating an effect image provided in this embodiment may execute the technical solutions of the above method embodiments, so that it has similar implementation principles and technical effects, which will not be repeated here.

Fig. 13 is a schematic structural diagram of an electronic device according to an embodiment of the present disclosure, as shown in Fig. 13, the electronic device 4 comprising:

a processor 41, and a memory 42 communicatively connected with the processor 41, wherein
the memory 42 stores computer-executable instructions; and
the processor 41 executes the computer-executable instructions stored by the memory 42 to implement the method for generating an effect image in the embodiments shown in Figs. 2-11.

Optionally, the processor 41 and the memory 42 are connected by a bus 43.

The related description may be understood by correspondingly referring to the related description and effect corresponding to the steps in the embodiments corresponding to Figs. 2-11, and will not be repeated here.

An embodiment of the present disclosure provides a computer-readable storage medium having stored thereon computer-executable instructions which, when executed by a processor, implement the method for generating an effect image according to any of the embodiment corresponding to Figs. 2-11 of the present disclosure.

An embodiment of the present disclosure provides a non-transitory computer program product comprising a computer program which, when executed by a processor, implements the method for generating an effect image in the embodiments shown in Figs. 2-11.

An embodiment of the present disclosure provides a computer program which, when executed by a processor, implements the method for generating an effect image in the embodiments shown in Figs. 2-11.

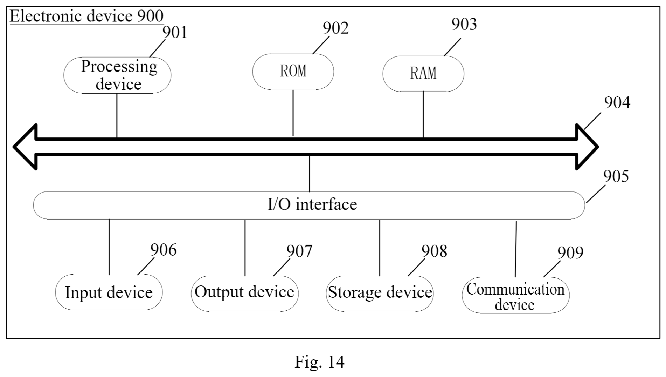

Referring to Fig. 14, it shows a schematic structural diagram of an electronic device 900 suitable for implementing an embodiment of the present disclosure, wherein the electronic device 900 may be a terminal device or a server. The terminal device may include, but is not limited to, a mobile terminal such as a mobile phone, a laptop, a digital broadcast receiver, a personal digital assistant (PDA for short), a portable android device (PAD for short), a portable multimedia player (PMP for short), a vehicle-mounted terminal (e.g., a vehicle-mounted navigation terminal), etc., and a fixed terminal such as a digital TV and a desk computer. The electronic device shown in Fig. 14 is only an example, and should not bring any limitation to the functions and the scope of use of the embodiments of the present disclosure.

As shown in Fig. 14, the electronic device 900 may include a processing device (e.g., a central processing unit, a graphics processing unit, etc.) 901, which may perform various suitable actions and processes according to a program stored in a read-only memory (ROM) 902 or a program loaded from a storage device 908 into a random access memory (RAM) 903. In the RAM 903, various programs and data required for the operation of the electronic device 900 are also stored. The processing device 901, ROM 902, and RAM 903 are connected to each other via a bus 904. An input/output (I/O) interface 905 is also connected to bus 904.

Generally, the following device may be connected to the I/O interface 905: an input device 906 including, for example, a touch screen, touch pad, keyboard, mouse, camera, microphone, accelerometer, gyroscope, etc.; an output device 907 including, for example, a liquid crystal display (LCD), speaker, vibrator, etc.; the storage device 908 including, for example, a magnetic tape, hard disk, etc.; and a communication device 909. The communication device 909 may allow the electronic device 900 to communicate with another device wirelessly or by wire to exchange data. While Fig. 14 illustrates the electronic device 900 having various devices, it should be understood that there is no requirement that all illustrated devices are implemented or provided. More or fewer devices may be alternatively implemented or provided.

In particular, according to the embodiments of the present disclosure, the processes described above with reference to the flow diagrams may be implemented as a computer software program. For example, an embodiment of the present disclosure comprises a computer program product comprising a computer program carried on a computer-readable medium, the computer program comprising program codes for performing the method illustrated by the flow diagrams. In such an embodiment, this computer program may be downloaded and installed from a network by the communication device 909, or installed from the storage device 908, or installed from the ROM 902. The computer program, when executed by the processing device 901, performs the above functions defined in the method of the embodiment of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device.

However, in the present disclosure, the computer-readable signal medium may include a data signal propagated in baseband or as part of a carrier wave, in which computer-readable program codes are carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program codes contained on the computer-readable medium may be transmitted using any appropriate medium, including but not limited to: a wire, an optical cable, RF (Radio Frequency), etc., or any suitable combination of the foregoing.

The above computer-readable medium may be contained in the above electronic device; or may exist separately without being assembled into the electronic device.

The above computer-readable medium has carried thereon one or more programs which, when executed by the electronic device, cause the electronic device to perform the method shown in the above embodiments.

Computer program codes for performing the operation of the present disclosure may be written in one or more programming languages or a combination thereof, wherein the above programming language includes an object-oriented programming language such as Java, Smalltalk, and C++, and also includes a conventional procedural programming language, such as a "C" language or a similar programming language. The program codes may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any type of network, including a local area network (LAN for short) or a wide area network (WAN for short), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of codes, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit does not, in some cases, constitute a limitation on the unit itself. for example, a first acquiring unit may also be described as "a unit acquiring at least two internet protocol addresses".

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard product (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

In a first aspect, according to one or more embodiments of the present disclosure, there is provided a method for generating an effect image, comprising:

acquiring an initial image which comprises a target region; and fusing the target region of the initial image with an effect image to generate a fusion image, wherein the fusion image comprises at least one sub-region in which image content in the target region and image content of the effect image are simultaneously displayed.

According to one or more embodiments of the present disclosure, the target region at least comprises a hair region, and the fusing the target region of the initial image with an effect image to generate a fusion image comprises: superimposing image content in the hair region onto the effect image in a semi-transparent manner to obtain a first superimposition image; and obtaining the fusion image based on the first superimposition image.

According to one or more embodiments of the present disclosure, the target region at least further comprises a skin region, and the obtaining the fusion image based on the first superimposition image comprises: superimposing image content in the skin region onto the first superimposition image in a non-transparent or semi-transparent manner to obtain a second superimposition image; and obtaining the fusion image based on the second superimposition image.

According to one or more embodiments of the present disclosure, the method further comprises: acquiring texture information corresponding to the hair region, which characterizes texture directions of hair strands in the hair region; and moving target elements in the fusion image based on the texture information so that the target elements are arranged or moved in the texture directions of the hair strands.

According to one or more embodiments of the present disclosure, after the acquiring an initial image, the method further comprises: performing image segmentation for at least one portrait element in the target region to obtain at least two mask images with the portrait element as an edge; and the fusing the target region of the initial image with an effect image to generate a fusion image comprises: superimposing the mask image onto the effect image based on a superimposition strategy corresponding to the mask image to generate the fusion image.

According to one or more embodiments of the present disclosure, the portrait element comprises a hair element; the performing image segmentation for at least one portrait element in the target region to obtain the mask image with the portrait element as an edge comprises: performing image segmentation for the hair element to obtain a corresponding first mask image; and the superimposing the mask image onto the effect image based on a superimposition strategy corresponding to the mask image to generate the fusion image comprises: superimposing the first mask image onto the effect image based on a first superimposition strategy to generate a first superimposition image, wherein brightness of a pixel in the first superimposition image is determined by brightness of a pixel in a corresponding position in the effect image; and generating the fusion image based on the first superimposition image.

According to one or more embodiments of the present disclosure, after the performing image segmentation for the hair element to obtain a corresponding first mask image, the method further comprises: performing a sharpening process on the first mask image to obtain a sharpened image; and the superimposing the first mask image onto the effect image based on a first superimposition strategy to generate a first superimposition image comprises: superimposing the sharpened image onto the effect image based on the first superimposition strategy to generate the first superimposition image.

According to one or more embodiments of the present disclosure, the portrait element comprises a skin element; the performing image segmentation for at least one portrait element in the target region to obtain the mask image with the portrait element as an edge comprises: performing image segmentation for the skin element to obtain a corresponding second mask image; and the superimposing the mask image onto the effect image based on a superimposition strategy corresponding to the mask image to generate the fusion image comprises: superimposing the second mask image onto the effect image based on a second superimposition strategy to generate a second superimposition image, wherein brightness of a pixel in the second superimposition image is determined by brightness of a pixel in a corresponding position in the second mask image; and generating the fusion image based on the second superimposition image.

According to one or more embodiments of the present disclosure, the superimposing the second mask image onto the effect image based on a second superimposition strategy to generate a second superimposition image comprises: acquiring a gray-scale value of each pixel in the second mask image; and fusing the pixel in the second mask image and a pixel in corresponding positions in the effect image by using the gray-scale value as a weight to generate the second superimposition image.

According to one or more embodiments of the present disclosure, the method further comprises: adding an inverse filter to the mask image to obtain a corresponding filtered image, the inverse filter being at least used for inverting brightness of a pixel in the mask image; and the superimposing the mask image onto the effect image to generate the fusion image comprises: superimposing at least one filtered image onto the effect image to generate the fusion image.

According to one or more embodiments of the present disclosure, the adding an inverse filter to the mask image to obtain a corresponding filtered image comprises: obtaining a corresponding filter parameter according to the image content of the effect image; and adding the inverse filter to the mask image based on the filter parameter to obtain the corresponding filtered image.

According to one or more embodiments of the present disclosure, after the fusing the target region of the initial image with an effect image to generate a fusion image, the method further comprises: adding a dynamic effect for a second target region in the fusion image to obtain a dynamic effect image, wherein an effect type of the dynamic effect is determined by the image content of the effect image.

In a second aspect, according to one or more embodiments of the present disclosure, there is provided an apparatus for generating an effect image, comprising:

an acquiring module configured to acquire an initial image which comprises a target region; and

a generating module configured to fuse the target region of the initial image with an effect image to generate a fusion image, wherein the fusion image comprises at least one sub-region in which image content in the target region and image content of the effect image are simultaneously displayed.

According to one or more embodiments of the present disclosure, the target region at least comprises a hair region, and the generating module is specifically configured to: superimpose image content in the hair region onto the effect image in a semi-transparent manner to obtain a first superimposition image; and obtain the fusion image based on the first superimposition image.

According to one or more embodiments of the present disclosure, the target region at least further comprises a skin region, and the generating module is, when obtaining the fusion image based on the first superimposition image, specifically configured to: superimpose image content in the skin region onto the first superimposition image in a non-transparent or semi-transparent manner to obtain a second superimposition image; and obtain the fusion image based on the second superimposition image.

According to one or more embodiments of the present disclosure, the generating module is further configured to: acquire texture information corresponding to the hair region, which characterizes texture directions of hair strands in the hair region; and move target elements in the fusion image based on the texture information so that the target elements are arranged or moved in the texture directions of the hair strands.

According to one or more embodiments of the present disclosure, after the acquiring an initial image, the generating module is further configured to: perform image segmentation for at least one portrait element in the target region to obtain at least two mask images with the portrait element as an edge; and the generating module is, when fusing the target region of the initial image with an effect image to generate a fusion image, specifically configured to: superimpose the mask image onto the effect image based on a superimposition strategy corresponding to the mask image to generate the fusion image.

According to one or more embodiments of the present disclosure, the portrait element comprises a hair element; the generating module is, when performing image segmentation for at least one portrait element in the target region to obtain the mask image with the portrait element as an edge, specifically configured to: perform image segmentation for the hair element to obtain a corresponding first mask image; and the generating module is, when superimposing the mask image onto the effect image based on a superimposition strategy corresponding to the mask image to generate the fusion image, specifically configured to: superimpose the first mask image onto the effect image based on a first superimposition strategy to generate a first superimposition image, wherein brightness of a pixel in the first superimposition image is determined by brightness of a pixel in a corresponding position in the effect image; and generate the fusion image based on the first superimposition image.

According to one or more embodiments of the present disclosure, after the performing image segmentation for the hair element to obtain a corresponding first mask image, the generating module is further configured to: perform a sharpening process on the first mask image to obtain a sharpened image; and the generating module is, when superimposing the first mask image onto the effect image based on a first superimposition strategy to generate a first superimposition image, specifically configured to: superimpose the sharpened image onto the effect image based on the first superimposition strategy to generate the first superimposition image.

According to one or more embodiments of the present disclosure, the portrait element comprises a skin element; the generating module is, when performing image segmentation for at least one portrait element in the target region to obtain the mask image with the portrait element as an edge, specifically configured to: perform image segmentation for the skin element to obtain a corresponding second mask image; and the generating module is, when superimposing the mask image onto the effect image based on a superimposition strategy corresponding to the mask image to generate the fusion image, specifically configured to: superimpose the second mask image onto the effect image based on a second superimposition strategy to generate a second superimposition image, wherein brightness of a pixel in the second superimposition image is determined by brightness of a pixel in a corresponding position in the second mask image; and generate the fusion image based on the second superimposition image.

According to one or more embodiments of the present disclosure, the generating module is, when superimposing the second mask image onto the effect image based on a second superimposition strategy to generate a second superimposition image, specifically configured to: acquire a gray-scale value of each pixel in the second mask image; and fuse the pixel in the second mask image and a pixel in corresponding positions in the effect image by using the gray-scale value as a weight to generate the second superimposition image.

According to one or more embodiments of the present disclosure, the generating module is further configured to: add an inverse filter to the mask image to obtain a corresponding filtered image, the inverse filter being at least used for inverting brightness of a pixel in the mask image; and the generating module is, when superimposing the mask image onto the effect image to generate the fusion image, specifically configured to: superimpose at least one filtered image onto the effect image to generate the fusion image.

According to one or more embodiments of the present disclosure, the generating module is, when adding an inverse filter to the mask image to obtain a corresponding filtered image, specifically configured to: obtain a corresponding filter parameter according to the image content of the effect image; and add the inverse filter to the mask image based on the filter parameter to obtain the corresponding filtered image.

According to one or more embodiments of the present disclosure, after the fusing the target region of the initial image with an effect image to generate a fusion image, the generating module is further configured to: add a dynamic effect for a second target region in the fusion image to obtain a dynamic effect image, wherein an effect type of the dynamic effect is determined by the image content of the effect image.

In a third aspect, according to one or more embodiments of the present disclosure, there is provided an electronic device, comprising: a processor, and a memory communicatively connected with the processor, wherein

the memory stores computer-executable instructions; and
the processor executes the computer-executable instructions stored by the memory to implement the method for generating an effect image according to the above first aspect and various possible designs of the first aspect.

In a fourth aspect, according to one or more embodiments of the present disclosure, there is provided a non-transitory computer-readable storage medium having stored thereon computer-executable instructions which, when executed by a processor, implement the method for generating an effect image according to the above first aspect and various possible designs of the first aspect.

In a fifth aspect, an embodiment of the present disclosure provides a computer program product, comprising a computer program which, when executed by a processor, implements the method for generating an effect image according to the above first aspect and various possible designs of the first aspect.

In a sixth aspect, an embodiment of the present disclosure provides a computer program which, when executed by a processor, implements the method for generating an effect image according to the above first aspect and various possible designs of the first aspect.

The foregoing description is only illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

**Claims**

1. A method for generating an effect image, comprising:

   acquiring an initial image which comprises a target region; and
   fusing the target region of the initial image with an effect image to generate a fusion image, wherein the fusion image comprises at least one sub-region in which image content in the target region and image content of the effect image are simultaneously displayed.

2. The method according to claim 1, wherein the target region at least comprises a hair region, and the fusing the target region of the initial image with an effect image to generate a fusion image comprises:

   superimposing image content in the hair region onto the effect image in a semi-transparent manner to obtain a first superimposition image; and
   obtaining the fusion image based on the first superimposition image.

3. The method according to claim 2, wherein the target region at least further comprises a skin region, and the obtaining the fusion image based on the first superimposition image comprises:

superimposing image content in the skin region onto the first superimposition image in a non-transparent or semi-transparent manner to obtain a second superimposition image; and

obtaining the fusion image based on the second superimposition image.

4. The method according to claim 2, further comprises:

acquiring texture information corresponding to the hair region, which characterizes texture directions of hair strands in the hair region; and

moving target elements in the fusion image based on the texture information so that the target elements are arranged or moved in the texture directions of the hair strands.

5. The method according to claim 1, wherein, after the acquiring an initial image, the method further comprises:

performing image segmentation for at least one portrait element in the target region to obtain at least two mask images with the portrait element as an edge; and

the fusing the target region of the initial image with an effect image to generate a fusion image comprises:

superimposing the mask image onto the effect image based on a superimposition strategy corresponding to the mask image to generate the fusion image.

6. The method according to claim 5, wherein the portrait element comprises a hair element;

the performing image segmentation for at least one portrait element in the target region to obtain the mask image with the portrait element as an edge comprises:

performing image segmentation for the hair element to obtain a corresponding first mask image; and

the superimposing the mask image onto the effect image based on a superimposition strategy corresponding to the mask image to generate the fusion image comprises:

superimposing the first mask image onto the effect image based on a first superimposition strategy to generate a first superimposition image, wherein brightness of a pixel in the first superimposition image is determined by brightness of a pixel in a corresponding position in the effect image; and

generating the fusion image based on the first superimposition image.

7. The method according to claim 6, wherein, after the performing image segmentation for the hair element to obtain a corresponding first mask image, the method further comprises:

performing a sharpening process on the first mask image to obtain a sharpened image; and

the superimposing the first mask image onto the effect image based on a first superimposition strategy to generate a first superimposition image comprises:

superimposing the sharpened image onto the effect image based on the first superimposition strategy to generate the first superimposition image.

8. The method according to claim 5, wherein the portrait element comprises a skin element;

the performing image segmentation for at least one portrait element in the target region to obtain the mask image with the portrait element as an edge comprises:

performing image segmentation for the skin element to obtain a corresponding second mask image; and

the superimposing the mask image onto the effect image based on a superimposition strategy corresponding to the mask image to generate the fusion image comprises:

superimposing the second mask image onto the effect image based on a second superimposition strategy to generate a second superimposition image, wherein brightness of a pixel in the second superimposition image is determined by brightness of a pixel in a corresponding position in the second mask image; and

generating the fusion image based on the second superimposition image.

9. The method according to claim 8, wherein the superimposing the second mask image onto the effect image based on a second superimposition strategy to generate a second superimposition image comprises:

acquiring a gray-scale value of each pixel in the second mask image; and

fusing the pixel in the second mask image and a pixel in corresponding positions in the effect image by using the gray-scale value as a weight to generate the second superimposition image.

10. The method according to claim 5, wherein the method further comprises:

adding an inverse filter to the mask image to obtain a corresponding filtered image, the inverse filter being at least used for inverting brightness of a pixel in the mask image; and
the superimposing the mask image onto the effect image to generate the fusion image comprises:
superimposing at least one filtered image onto the effect image to generate the fusion image.

11. The method according to claim 10, wherein the adding an inverse filter to the mask image to obtain a corresponding filtered image comprises:

obtaining a corresponding filter parameter according to the image content of the effect image; and
adding the inverse filter to the mask image based on the filter parameter to obtain the corresponding filtered image.

12. The method according to claim 1, wherein, after the fusing the target region of the initial image with an effect image to generate a fusion image, the method further comprises:
adding a dynamic effect for a second target region in the fusion image to obtain a dynamic effect image, wherein an effect type of the dynamic effect is determined by the image content of the effect image.

13. An apparatus for generating an effect image, comprising:

an acquiring module configured to acquire an initial image which comprises a target region; and
a generating module configured to fuse the target region of the initial image with an effect image to generate a fusion image, wherein the fusion image comprises at least one sub-region in which image content in the target region and image content of the effect image are simultaneously displayed.

14. An electronic device, comprising: a processor, and a memory communicatively connected with the processor, wherein

the memory stores computer-executable instructions; and
the processor executes the computer-executable instructions stored by the memory to implement the method for generating an effect image according to any of claims 1 to 12.

15. A non-transitory computer-readable storage medium having stored thereon computer-executable instructions which, when executed by a processor, implement the method for generating an effect image according to any of claims 1 to 12.

16. A computer program product comprising a computer program which, when executed by a processor, implements the method for generating an effect image according to any of claims 1 to 12.

17. A computer program which, when executed by a processor, implements the method for generating an effect image according to any of claims 1 to 12.

Fig. 1

S101

Acquiring an initial image which comprises a target region

S102

Fusing the target region of the initial image with an effect image to generate a fusion image, wherein the fusion image comprises at least one sub-region in which image content in the target region and image content of the effect image are simultaneously displayed

Fig. 2

Character contour

Portrait region

Hair region

Skin region

Fig. 3

S1021

Superimposing image content in the hair region of the initial image onto the effect image in a semi-transparent manner to obtain a first superimposition image

S1022

Obtaining the fusion image based on the first superimposition image

Fig. 4

Initial image

Image content of hair region

Image content of skin region

Effect image

Superimposing in a semi-transparent manner

First superimposition image

Superimposing in a non-transparent manner

Second superimposition image

Fusion image

Fig. 5

Fig. 6

First mask image

Initial image

Second mask image

Fig.7

R value

G value → Gray-scale value "gray" Inverse calculation →

B value

Fig. 8

S2031

Obtaining a corresponding filter parameter according to the image content of the effect image

S2032

Adding the inverse filter to the mask image based on the filter parameter to obtain the corresponding filtered image

Fig. 9

S2051

Superimposing the first mask image onto the effect image based on a first superimposition strategy to generate a first superimposition image, wherein brightness of a pixel in the first superimposition image is determined by brightness of a pixel in a corresponding position in the effect image

S2052

Superimposing the second mask image onto the effect image based on a second superimposition strategy to generate a second superimposition image, wherein brightness of a pixel in the second superimposition image is determined by brightness of a pixel in a corresponding position in the second mask image

S2053

Generating the fusion image based on the first superimposition image and the second superimposition image

Fig. 10

Second superimposition image

Fig. 11

Apparatus for generating effect image

| Acquiring module 31 | Generating module 32 |

Fig. 12

Electronic device 4

Memory 42

43

Processor 41

Fig. 13

Electronic device 900

901 Processing device

902 ROM

903 RAM

904

I/O interface

905

906 Input device

907 Output device

908 Storage device

909 Communication device

Fig. 14

## INTERNATIONAL SEARCH REPORT

| International application No. |
| --- |
| **PCT/CN2024/085496** |

| A. | CLASSIFICATION OF SUBJECT MATTER |
| --- | --- |

G06T 3/00(2024.01)i;  G06T7/00(2017.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, ENTXTC, ENTXT, DWPI, CNKI, IEEE: 半透明, 背景, 叠加, 对象, 合成, 亮度, 目标, 皮肤, 权重, 人脸, 人物, 融合, 特效, 添加, 头发, 透明度, 掩模, 掩膜, 主体, target, fusion, weight, mask, hair, background, overlay, transparency, special effect

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116452412 A (BEIJING BYTEDANCE NETWORK TECHNOLOGY CO., LTD. et al.) 18 July 2023 (2023-07-18)<br>claims 1-16 | 1-17 |
| X | JP 2011203835 A (KONAMI DIGITAL ENTERTAINMENT CO., LTD.) 13 October 2011 (2011-10-13)<br>description, paragraphs 59-64, and figure 8 | 1-4, 12-17 |
| Y | JP 2011203835 A (KONAMI DIGITAL ENTERTAINMENT CO., LTD.) 13 October 2011 (2011-10-13)<br>description, paragraphs 59-64, and figure 8 | 5, 10-11 |
| Y | CN 110458781 A (BEIJING BAIDU NETCOM SCIENCE AND TECHNOLOGY CO., LTD.) 15 November 2019 (2019-11-15)<br>description, paragraphs 51-55 | 5, 10-11 |
| A | CN 113034354 A (BEIJING YOUCAI TECHNOLOGY CO., LTD.) 25 June 2021 (2021-06-25)<br>entire document | 1-17 |

☑ Further documents are listed in the continuation of Box C.        ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 May 2024** | **28 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/085496**

### C.    DOCUMENTS CONSIDERED TO BE RELEVANT

| Category* | Citation of document, with indication, where appropriate, of the relevant passages | Relevant to claim No. |
|---|---|---|
| A | CN 115293994 A (TENCENT TECHNOLOGY (SHENZHEN) CO., LTD.) 04 November 2022 (2022-11-04)<br>          entire document | 1-17 |
| A | WO 2022261828 A1 (GUANGDONG OPPO MOBILE COMMUNICATIONS CO., LTD.) 22 December 2022 (2022-12-22)<br>          entire document | 1-17 |
| A | US 2023074060 A1 (TENCENT TECHNOLOGY (SHENZHEN) CO., LTD.) 09 March 2023 (2023-03-09)<br>          entire document | 1-17 |

## INTERNATIONAL SEARCH REPORT
### Information on patent family members

International application No.

**PCT/CN2024/085496**

| Patent document cited in search report | | | Publication date (day/month/year) | Patent family member(s) | | | Publication date (day/month/year) |
|---|---|---|---|---|---|---|---|
| CN | 116452412 | A | 18 July 2023 | None | | | |
| JP | 2011203835 | A | 13 October 2011 | None | | | |
| CN | 110458781 | A | 15 November 2019 | None | | | |
| CN | 113034354 | A | 25 June 2021 | None | | | |
| CN | 115293994 | A | 04 November 2022 | WO | 2024067461 | A1 | 04 April 2024 |
| WO | 2022261828 | A1 | 22 December 2022 | None | | | |
| US | 2023074060 | A1 | 09 March 2023 | EP | 4261784 | A1 | 18 October 2023 |
| | | | | WO | 2022218082 | A1 | 20 October 2022 |
| | | | | CN | 113724175 | A | 30 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310437532